# EUROPEAN PATENT APPLICATION

(11) **EP 4 332 540 A1**
(43) Date of publication of application: **06.03.2024**
(21) Application number: 22866312.6
(22) Date of filing: 10.08.2022
(51) Int. Cl.: G01M 17/08

(54) **MOTION STATE MONITORING SYSTEM AND LOCOMOTIVE**

(30) Priority: 10.09.2021 CN 202111062217
(71) Applicant: CRRC Datong Co., Ltd., Pingcheng District Datong Shaanxi 037038 (CN)
(72) Inventor: YAN, Kechao, Datong, Shanxi 037038 (CN); LI, Qian, Datong, Shanxi 037038 (CN); XU, Yanhui, Datong, Shanxi 037038 (CN); ZHANG, Zhihe, Datong, Shanxi 037038 (CN)
(74) Representative: Manitz Finsterwald Patent- und Rechtsanwaltspartnerschaft mbB
(86) International application number: PCT/CN2022/111342
(87) International publication number: WO 2023/035838

(57) **Abstract**

The present invention provides a motion state monitoring system and a locomotive. The motion state monitoring system comprises an acquisition module, a processing module, and a remote module; the acquisition module is provided on a key component, and is used for acquiring vibration data or strain data of the key component; the processing module is provided on the locomotive, is connected to the acquisition module in a wireless mode, and is used for calculating a vibration signal of the key component according to the vibration data or the strain data; and the remote module is used for receiving and storing the vibration signal, the vibration data and the strain data. By means of the design, the present invention can achieve data calculation and data transmission and storage of the motion state of the key component of a direct-drive bogie, and achieve accurate and efficient monitoring of the motion state of the key component of the direct-drive bogie. Moreover, by means of the design that the processing module and the acquisition module are connected in a wireless mode, the present invention can be further suitable for monitoring applications under the complex structure condition and the rotation operation condition of the direct-drive bogie.

## Description

### CROSS REFERENCE TO RELATED APPLICATIONS

The present disclosure claims priority to Chinese Patent Application No. 202111062217.1 entitled "Motion state monitoring system and locomotive", filed on September 10, 2021, and the entire contents of which are incorporated herein by reference.

### TECHNICAL FIELD

The present disclosure relates to the field of locomotive operation monitoring technology, and in particular, to a motion state monitoring system and a locomotive.

### BACKGROUND

The high-power permanent magnet direct-drive passenger electric locomotive belongs to a frontier subject in the industry. Whether the bogie using permanent magnet direct-drive transmission technology can meet the application requirements or not, and the application state and life evaluation of the key component need to be verified through performing monitoring and evaluation research work.

However, the research work for the state monitoring of the permanent magnet direct-drive bogie and the life evaluation of the key component in the current industry is basically in the blank stage. Moreover, the wired sensor is difficult to implement under complex structural conditions and rotational operation conditions of the direct-drive bogie of the locomotive, resulting in a technical problem in state monitoring and life evaluation of the component.

Taking a wheel set as an example, an existing motion state monitoring method for a wheel set of a rotating component of the electric locomotive is to use a force measurement wheel set, that is, to machine a patch positioning circle and a threading hole on wheel and the axle. In addition, it is also needed to ensure the machining precision requirement. After the test is completed, since the wheel and the axle are machined, they cannot be continuously used subsequently, which leads to the disadvantages of high test cost, low test efficiency, etc.

### SUMMARY

A main objective of the present disclosure is to overcome at least one defect in the related art, and provide a motion state monitoring system capable of accurately and efficiently monitoring the motion state of a key component of a direct-drive bogie.

Another main objective of the present disclosure is to overcome at least one defect in the related art, and provide a locomotive having the above-mentioned motion state monitoring system.

In order to achieve the above objectives, the present disclosure adopts the following technical solutions:

According to an aspect of the present disclosure, there is provided a motion state monitoring system, the motion state monitoring system is configured to monitor a motion state of a key component of a direct-drive bogie of a locomotive, and the motion state monitoring system includes an acquisition module, a processing module and a remote module. The acquisition module is provided on the key component and configured to acquire vibration data or strain data of the key component; the processing module is provided on the locomotive and connected to the acquisition module in a wireless mode, and configured to calculate a vibration signal of the key component according to the vibration data or the strain data; the remote module is configured to receive and store the vibration signal, the vibration data, and the strain data.

According to an embodiment of the present disclosure, the key component at least includes an axle box body, a coupling, a motor, a damper, a motor suspension arm and a motor suspension rod; where the motion state monitoring system includes a plurality of acquisition modules, and the plurality of acquisition modules are provided on the axle box body, the coupling, the motor, the damper, the motor suspension arm and the motor suspension rod, respectively.

According to an embodiment of the present disclosure, where, the key component includes an axle box body, and the acquisition module is provided on a vertical surface below a shaft hole flange of the axle box body; and/or, the key component includes a coupling, the coupling includes a force transmission plate and a transmission plate, and the acquisition module is provided on a vertical surface of a flange of the force transmission plate and on a vertical surface of a flange of the transmission plate; and/or, the key component includes a motor, a housing of the motor is provided with a boss for connecting a motor suspension rod, and the acquisition module is provided on a vertical surface of the boss; and/or, the key component includes a damper, and the acquisition module is provided on a vertical surface of a rubber joint at a frame end of the damper and on a vertical surface of a rubber joint at a vehicle body end of the damper; and/or, the key component includes a motor suspension arm, and the acquisition module is provided on a vertical surface of the motor suspension arm; and/or, the key component includes a motor suspension rod, and the acquisition module is provided on a vertical surface of a rod body of the motor suspension rod.

According to an embodiment of the present disclosure, the acquisition module is fixed to the key component through a sealant.

According to an embodiment of the present disclosure, the acquisition module includes a wireless vibration and strain sensor.

According to an embodiment of the present disclosure, the processing module includes a host, a communication unit and a power supply module; the host is configured to calculate the vibration signal; the communication unit is connected to the host and configured for wireless interaction between the host and the acquisition module; and, the power supply module is electrically connected to the host and the communication unit, respectively, to provide a power supply to the host and the communication unit.

According to an embodiment of the present disclosure, a method for the processing module to calculate the vibration signal includes a three-way vibration real-time decoupling algorithm.

According to an embodiment of the present disclosure, the remote module includes a cloud platform.

According to an embodiment of the present disclosure, the remote module is further configured to calculate vibration information of the key component according to the vibration data or the strain data, so that the motion state monitoring system is configured to switch between two working modes; where in a working mode, the processing module calculates the vibration information and sends the vibration information to the remote module; and in another mode, the processing module sends the vibration data or the strain data to the remote module, and the remote module calculates the vibration information.

According to another aspect of the present disclosure, there is provided a locomotive including a direct-drive bogie; the locomotive further includes the motion state monitoring system provided in the present disclosure according to the above embodiments, and the acquisition module is provided on a key component of the direct-drive bogie.

It can be seen from the above technical solutions that the motion state monitoring system provided in the present disclosure includes an acquisition module, a processing module, and a remote module. The acquisition module is configured to acquire vibration data or strain data of the key component. The processing module is configured to calculate a vibration signal of the key component according to the vibration data or the strain data. The remote module is configured to receive and store the vibration signal, the vibration data, and the strain data. With the above design, data calculation, data transmission and storage for the motion state of the key component of the direct-drive bogie can be implemented in the present disclosure, thus accurately and efficiently monitoring the motion state of the key component of the direct-drive bogie. Moreover, in the present disclosure, with the design that the processing module and the acquisition module are connected in a wireless mode, it can be further suitable for monitoring applications under complex structural conditions and rotating operation conditions of the direct-drive bogie.

### BRIEF DESCRIPTION OF THE DRAWINGS

FIG. 1 is a system schematic diagram of a motion state monitoring system illustrated according to an exemplary embodiment;
FIG. 2 is a module schematic diagram of a processing module of the motion state monitoring system shown in FIG. 1;
FIG. 3 to FIG. 10 are schematic diagrams of arrangement positions of the acquisition module of the motion state monitoring system shown in FIG. 1 on a plurality of key components of the direct-drive bogie.

### DETAILED DESCRIPTION

Example embodiments will now be described more fully with reference to the accompanying drawings. Example embodiments, however, can be implemented in various forms and should not be construed as limited to the embodiments set forth herein; by contrast, these embodiments are provided so that the present disclosure will be thorough and complete, and will fully convey the concept of example embodiments to those skilled in the art. The same reference numerals in the drawings denote the same or similar structures, and thus their detailed descriptions will be omitted.

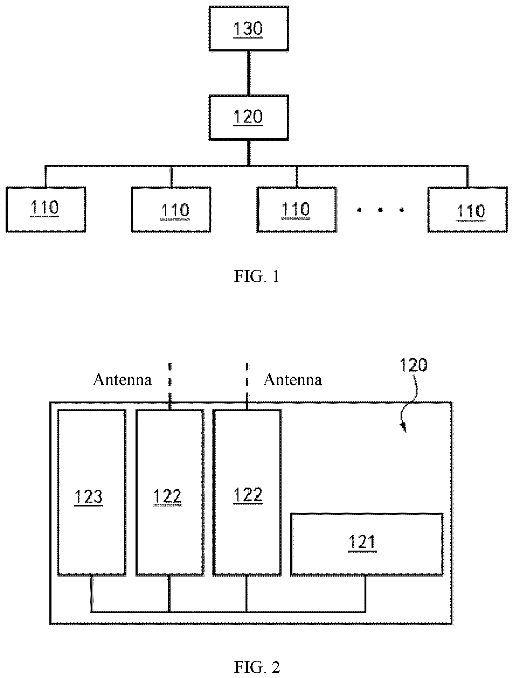

Referring to FIG. 1, a system schematic diagram of a motion state monitoring system according to the present disclosure is representatively illustrated. In the example embodiment, the motion state monitoring system provided by the present disclosure is described by taking a permanent magnet direct-drive bogie applied to an electric locomotive as an example. It will be readily understood by those skilled in the art that, various modifications, additions, substitutions, deletions, or other changes, which are made to the following detailed description in order to apply the related design of the present disclosure to the motion state monitoring of other types of direct-drive bogies, still fall within the scope of the principles of the motion state monitoring system provided in the present disclosure.

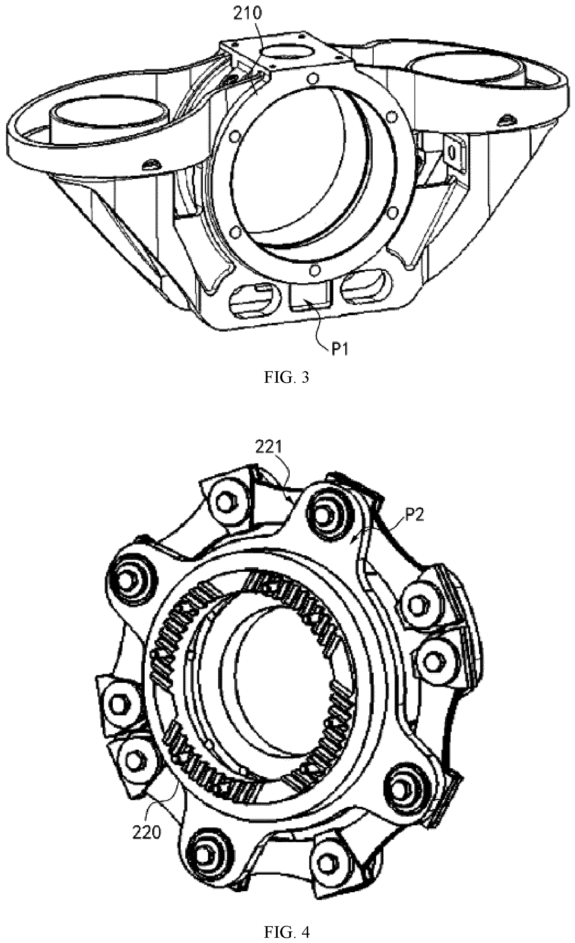

As shown in FIG. 1, in the embodiment, the motion state monitoring system provided by the present disclosure can be used to monitor the motion state of a key component of a direct-drive bogie of a locomotive. The motion state monitoring system includes an acquisition module 110, a processing module 120, and a remote module 130. Cooperatively referring to FIG. 2 to FIG. 10, FIG. 2 representatively illustrates a module schematic diagram of the processing module 120 of the motion state monitoring system capable of embodying the principle of the present disclosure; FIG. 3 to FIG. 10 respectively show schematic diagrams of arrangement positions of the acquisition module 110 on a plurality of key components of the direct-drive bogie. The arrangement, connection mode and functional relationship of the main modules of the motion state monitoring system provided by the present disclosure will be described in detail below with reference to the accompanying drawings.

As shown in FIG. 1, in the embodiment, the acquisition module 110 is provided on the key component and configured to acquire vibration data or strain data of the key component. The processing module 120 is provided on the locomotive and connected to the acquisition module 110 in a wireless mode, and is configured to calculate a vibration signal of the key component according to the vibration data or the strain data. The remote module 130 is configured to receive and store the vibration signal, the vibration data, and the strain data. With the above design, data calculation, data transmission and storage for the motion state of the key component of the direct-drive bogie can be implemented in the present disclosure, thus accurately and efficiently monitoring the motion state of the key component of the direct-drive bogie. Moreover, in the present disclosure, with the design that the processing module 120 and the acquisition module 110 are connected in a wireless mode, it can be further suitable for monitoring applications under complex structural conditions and rotating operation conditions of the direct-drive bogie.

Specifically, according to the motion state monitoring system provided by the present disclosure, the acquisition module 110 is arranged on the key component of the direct-drive bogie to carry out the motion state monitoring of the direct-drive bogie, so that remote transmission of the vibration data and the strain data is realized, the acquired data is analyzed and the life of the key component is evaluated, a sufficient data support is provided for structural design and performance improvement of the direct-drive bogie, and a real-time detection and analysis platform for vibration characteristics of the direct-drive bogie is built. Moreover, the motion state monitoring system provided by the present disclosure adopts a wireless sensing test system with small size, ad-hoc network, high synchronization and low delay, and a monitoring method suitable for the motion state of the rotating component of the rail vehicle is provided, which solves the technical problem that the wired sensor is not easy to implement under complex structure conditions. The efficiency of the monitoring test is improved, and the test cost is reduced. Among them, the motion state monitoring system according to the present disclosure adopts the acquisition module 110 in a wireless transmission mode, so that real-time transmission of acquired data can be realized, and the data stability is better. According to the present disclosure, there is no need to connect lines, and the deployment is simple. According to the present disclosure, a distributed network is adopted, which is self-organized and scalable. According to the present disclosure, multiple nodes cooperate with each other simultaneously to form a highly unified network structure, which can effectively improve the accuracy of data acquisition and reliability of operations.

Continuing from the above description, as shown in FIG. 1, via the above design, the motion state monitoring system according to the present disclosure generally forms a multilayer morphological monitoring system including a receiving layer, a processing layer, and a remote layer. Among them, the receiving layer may be composed of one or more acquisition modules 110 configured for data acquisition. The processing layer may be composed of a processing module 120 configured for calculating a monitoring signal according to the data. The remote layer may be composed of a remote module 130 configured for Reception and storage of the data and monitoring signals, information services, device monitoring, and operation and maintenance.

In some embodiments, the processing layer may also send other state information of the locomotive to the remote layer, such as locomotive speed information, GPS information, locomotive current, pressure and other monitoring information, etc. Specifically, the processing module 120 may be connected to the state monitoring gateway of the locomotive, so as to obtain the above locomotive state information.

As shown in FIG. 3 to FIG. 10, the key components of the direct-drive bogie at least include an axle box body 210, a coupling, a motor 240, a damper, a motor suspension arm 270, and a motor suspension rod 280. Based on this, the motion state monitoring system may include a plurality of acquisition modules 110, which are respectively provided on the axle box body 210, the coupling, the motor 240, the damper, the motor suspension arm 270, and the motor suspension rod 280, and are respectively configured to acquire vibration data of the axle box body 210, vibration data of the coupling, vibration data of the motor 240, vibration data of the damper, strain data of the motor suspension arm 270, and strain data of the motor suspension rod 280. In some embodiments, the acquisition module 110 may also be provided on other components of the direct-drive bogie, and for the direct-drive bogie including the above-mentioned key components, the acquisition modules 110 of the motion state monitoring system may also only be provided on some of the key components, which may be flexibly selected according to monitoring requirements, and is not limited to this.

Specifically, as shown in FIG. 3, when the axle box body 210 is provided with the acquisition module 110 of the motion state monitoring system, the acquisition module 110 may be provided on the vertical surface below the axle hole flange 211 of the axle box body 210. Accordingly, the processing module 120 can determine the motion state of the wheel through analyzing the vibration data of the axle box body 210. Among them, FIG. 3 shows one of the mounting positions P1 of the acquisition module 110 on the axle box body 210.

Specifically, as shown in FIG. 4, when the force transmission plate 220 of the coupling is provided with the acquisition module 110 of the motion state monitoring system, the acquisition module 110 may be provided on the vertical surface of the flange 221 of the force transmission plate 220. Accordingly, the processing module 120 can determine the motion state of the coupling through analyzing the vibration data of the force transmission plate 220. Among them, FIG. 4 shows one of the mounting positions P2 of the acquisition module 110 on the force transmission plate 220 of the coupling.

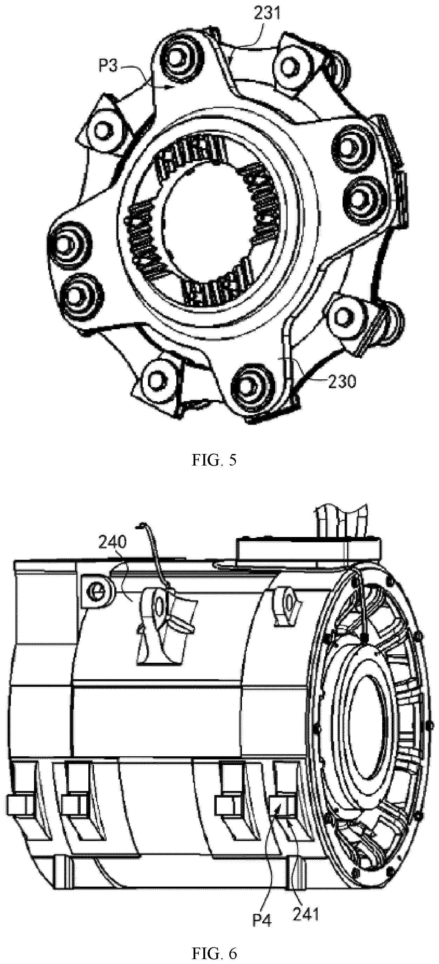

Specifically, as shown in FIG. 5, when the transmission plate 230 of the coupling is provided with the acquisition module 110 of the motion state monitoring system, the acquisition module 110 may be provided on the vertical surface of the flange 231 of the transmission plate 230. Accordingly, the processing module 120 can determine the motion state of the coupling through analyzing the vibration data of the transmission plate 230. Among them, FIG. 5 shows one of the mounting positions P3 of the acquisition module 110 on the transmission plate 230 of the coupling.

Specifically, as shown in FIG. 6, the housing of the motor 240 is provided with a boss 241 for connecting the motor suspension rod 280. Based on this, when the motor 240 is provided with the acquisition module 110 of the motion state monitoring system, the acquisition module 110 may be provided on the vertical surface of the boss 241. Accordingly, the processing module 120 can determine the motion state of the motor 240 through analyzing the vibration data of the motor 240. Among them, FIG. 6 shows one of the mounting positions P4 of the acquisition module 110 on the motor 240.

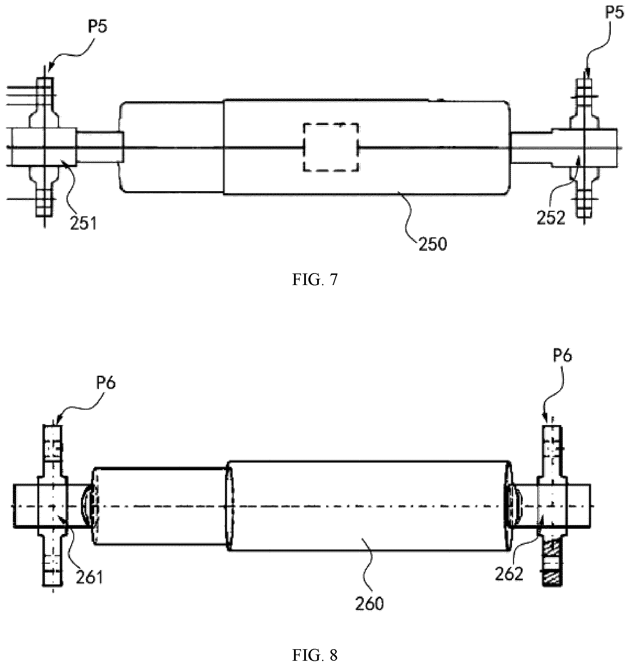

Specifically, as shown in FIG. 7, when the anti-yaw damper 250 is provided with the acquisition module 110 of the motion state monitoring system, two acquisition modules 110 may be provided on the anti-yaw damper 250, and the two acquisition modules 110 may be respectively provided on the vertical surface of the rubber joint 251 at the frame end of the anti-yaw damper 250 and on the vertical surface of the rubber joint 252 at the vehicle body end of the anti-yaw damper 250. Accordingly, the processing module 120 can determine the motion state of the bogie through analyzing the vibration data of the anti-yaw damper 250. Among them, FIG. 7 shows one of the mounting positions P5 of the acquisition module 110 on the anti-yaw damper 250. snaking-resistant

Specifically, as shown in FIG. 8, when the secondary lateral damper 260 is provided with the acquisition module 110 of the motion state monitoring system, two acquisition modules 110 can be provided on the secondary lateral damper 260, and the two acquisition modules 110 can be respectively provided on the vertical surface of the rubber joint 261 at the framework end of the secondary lateral damper 260 and the vertical surface of the rubber joint 262 at the vehicle body end of the secondary lateral damper 260. Accordingly, the processing module 120 can determine the motion state of the bogie through analyzing the vibration data of the secondary lateral damper 260. Among them, FIG. 8 shows one of the mounting positions P6 of the acquisition module 110 on the secondary lateral damper 260.

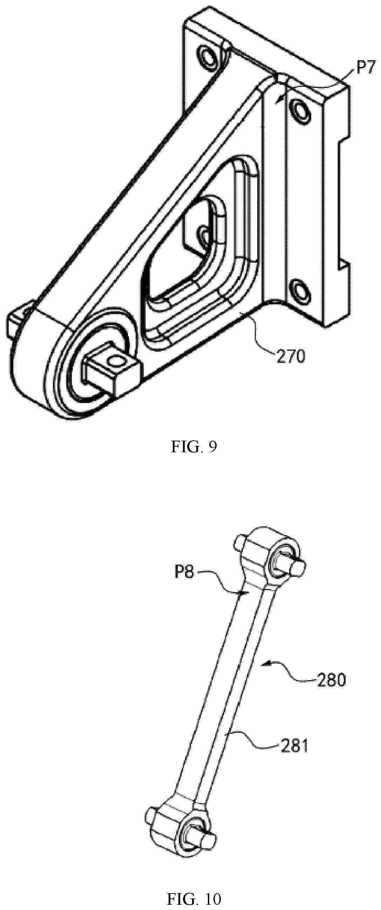

Specifically, as shown in FIG. 9, when the motor suspension arm 270 is provided with the acquisition module 110 of the motion state monitoring system, the acquisition module 110 may be provided on the vertical surface of the motor suspension arm 270. Accordingly, the processing module 120 can evaluate the life of the motor suspension arm 270 through analyzing the strain data of the motor suspension arm 270. Among them, FIG. 9 shows one of the mounting positions P7 of the acquisition module 110 on the motor suspension arm 270.

Specifically, as shown in FIG. 10, when the motor suspension rod 280 is provided with the acquisition module 110 of the motion state monitoring system, the acquisition module 110 may be provided on a vertical surface of the main body portion 281 of the motor suspension rod 280. Accordingly, the processing module 120 can evaluate the life of the motor suspension rod 280 through analyzing the strain data of the motor suspension rod 280. Among them, FIG. 10 shows one of the mounting positions P8 of the acquisition module 110 on the motor suspension rod 280.

It should be noted that the mounting positions P1 to P8 of the plurality of key components are equivalent to a plurality of vibration monitoring points of the motion state monitoring system. These vibration monitoring points can form a vibration characteristic network system to comprehensively consider the vibration transmission characteristics of the bogie system and the motion state of each component. These vibration monitoring points can be arranged as the network system in combination with the monitoring system to monitor the motion state of the key components of the direct drive bogie together.

Optionally, in the embodiment, the acquisition module 110 can be fixed to the key component through a sealant. In some embodiments, the acquisition module 110 may also be fixed to the key component in other manners, which is not limited to this.

Optionally, in the embodiment, the acquisition module 110 may include a wireless vibration and strain sensor.

Specifically, the processing layer composed of the processing module 120 is further capable of completing sensing layer protocol parsing and signal reception, acquiring the locomotive speed signal, the GPS position signal, and other monitoring signals, and sending the calculated monitoring signal and the read monitoring information to the remote layer, in addition to calculating the monitoring signal according to the data acquired by the receiving layer.

Optionally, as shown in FIG. 2, in the embodiment, the processing module 120 may include a host 121, a communication unit 122, and a power supply module 123. Specifically, the host 121 is configured to calculate a vibration signal. The communication unit 122 is connected to the host 121 and configured for wireless interaction between the host 121 and the acquisition module 110. The power supply module 123 is electrically connected to the host 121 and the communication unit 122, respectively, and is configured to provide a power supply to the host 121 and the communication unit 122.

Specifically, as shown in FIG. 2, the working principle of the processing module 120 includes: inputting a 110V direct current from a central terminal row of the locomotive, and converting the direct current into 24V power through the power supply module 123 for use by the host 121 and the communication unit 122. After the antenna receives the signal of the wireless sensor, the signal is input to the vehicle-mounted host 121 through the communication unit 122, so as to implement data transmission, storage, calculation, etc.

Preferably, as shown in FIG. 2, in the embodiment, taking that each of the mounting positions P1 to P8 shown in FIG. 3 to FIG. 10 is provided with the acquisition module 110 as an example, the processing module 120 may include two communication units 122, which can adapt to the wireless interaction between the above large number of acquisition modules 110 and the host 121. In some embodiments, the processing module 120 may also include one, three or more communication units 122, which may be flexibly selected according to the number of the acquisition modules 110 or the model of the communication unit 122.

Optionally, in the embodiment, the calculation method used by the processing module 120 to calculate the vibration signal may include a three-way vibration real-time decoupling algorithm. The algorithm first performs stress analysis for the acquisition module 110 (such as a wireless vibration sensor) in a constant-speed rotation state, determines stress conditions in the XYZ three directions according to the mounting position of the sensor, and analyzes the force transmission effect to realize the calculation of the vibration signal. Accordingly, in the present disclosure, a three-way vibration real-time decoupling algorithm for a rotating component is applied to a vibration characteristic test of a novel flexible plate coupling of a direct-drive system of a permanent magnet direct-drive alternating-current transmission passenger electric locomotive, verifies the safety and reliability of the novel flexible plate coupling direct-drive system in the application process, and is beneficial to the popularization and application of the novel flexible plate coupling direct drive system.

Optionally, in the embodiment, the remote module 130 may include a cloud platform.

Optionally, in the embodiment, the remote module 130 may be further configured to calculate vibration information of the key component according to the vibration data or the strain data. Accordingly, the motion state monitoring system switches between two working modes, where in one working mode, the processing module 120 calculates the vibration information and sends the vibration information to the remote module 130; and in the other mode, the processing module 120 sends the vibration data or the strain data to the remote module 130, and the remote module 130 calculates the vibration information.

Based on the above detailed description of several example embodiments of the motion state monitoring system provided by the present disclosure, an example embodiment of the locomotive provided by the present disclosure will be described below.

In the embodiment, the locomotive provided by the present disclosure includes a direct drive bogie and the motion state monitoring system according to the present disclosure and described in detail in the above-mentioned embodiments. Among them, the direct-drive bogie includes key components such as an axle box body, a coupling, a motor, a damper, a motor suspension arm and a motor suspension rod etc. An acquisition module of the motion state monitoring system may be provided on at least one of the above key components of the direct-drive bogie.

Although the present disclosure has been described with reference to several typical embodiments, it should be understood that the terms used are illustrative and exemplary and not restrictive. Since the present disclosure can be embodied in various forms without departing from the spirit or essence of the disclosure, it should be understood that the above-described embodiments are not limited to any of the foregoing details, but should be construed broadly within the spirit and scope defined by the appended claims. Therefore, all changes and modifications that fall within the claims or their equivalents should be covered by the appended claims.

## Claims

1. A motion state monitoring system, wherein the motion state monitoring system is configured to monitor a motion state of a key component of a direct-drive bogie of a locomotive, and the motion state monitoring system comprises:
an acquisition module, provided on the key component and configured to acquire vibration data or strain data of the key component;
a processing module, provided on the locomotive and connected to the acquisition module in a wireless mode, and configured to calculate a vibration signal of the key component according to the vibration data or the strain data; and
a remote module, configured to receive and store the vibration signal, the vibration data, and the strain data.

2. The motion state monitoring system according to claim 1, wherein the key component at least comprises an axle box body, a coupling, a motor, a damper, a motor suspension arm and a motor suspension rod; wherein the motion state monitoring system comprises a plurality of acquisition modules, and the plurality of acquisition modules are provided on the axle box body, the coupling, the motor, the damper, the motor suspension arm and the motor suspension rod, respectively.

3. The motion state monitoring system according to claim 1, wherein the key component comprises an axle box body, and the acquisition module is provided on a vertical surface below a shaft hole flange of the axle box body.

4. The motion state monitoring system according to claim 1, wherein the key component comprises a coupling, the coupling comprises a force transmission plate and a transmission plate, and the acquisition module is provided on a vertical surface of a flange of the force transmission plate and on a vertical surface of a flange of the transmission plate.

5. The motion state monitoring system according to claim 1, wherein the key component comprises a motor, a housing of the motor is provided with a boss for connecting a motor suspension rod, and the acquisition module is provided on a vertical surface of the boss.

6. The motion state monitoring system according to claim 1, wherein the key component comprises a damper, and the acquisition module is provided on a vertical surface of a rubber joint at a frame end of the damper and on a vertical surface of a rubber joint at a vehicle body end of the damper.

7. The motion state monitoring system according to claim 1, wherein the key component comprises a motor suspension arm, and the acquisition module is provided on a vertical surface of the motor suspension arm.

8. The motion state monitoring system according to claim 1, wherein the key component comprises a motor suspension rod, and the acquisition module is provided on a vertical surface of a rod body of the motor suspension rod.

9. The motion state monitoring system according to claim 1, wherein the acquisition module is fixed to the key component through a sealant.

10. The motion state monitoring system according to claim 1, wherein the acquisition module comprises a wireless vibration and strain sensor.

11. The motion state monitoring system according to claim 1, wherein the processing module comprises:
a host, configured to calculate the vibration signal;
a communication unit, connected to the host and configured for wireless interaction between the host and the acquisition module; and
a power supply module, electrically connected to the host and the communication unit, respectively, to provide a power supply to the host and the communication unit.

12. The motion state monitoring system according to claim 1, wherein a method for the processing module to calculate the vibration signal comprises a three-way vibration real-time decoupling algorithm.

13. The motion state monitoring system according to claim 1, wherein the remote module comprises a cloud platform.

14. The motion state monitoring system according to claim 1, wherein the remote module is further configured to calculate vibration information of the key component according to the vibration data or the strain data, so that the motion state monitoring system is configured to switch between two working modes; wherein in a working mode, the processing module calculates the vibration information and sends the vibration information to the remote module; and in another mode, the processing module sends the vibration data or the strain data to the remote module, and the remote module calculates the vibration information.

15. A locomotive, comprising a direct-drive bogie, wherein the locomotive further comprises:
the motion state monitoring system according to any one of claims 1 to 14, wherein the acquisition module is provided on a key component of the direct-drive bogie.
